# EUROPEAN PATENT APPLICATION

(11) **EP 0 816 713 A2**
(43) Date of publication of application: **07.01.1998**
(21) Application number: 97110074.8
(22) Date of filing: 19.06.1997
(51) Int. Cl.: F16F 13/14

(54) **Liquid-encapsulating cylindrical mount**

(30) Priority: 01.07.1996 JP 170921/96
(71) Applicant: Kurashiki Kako Co., ltd., Kurashiki-shi, Okayama 712 (JP)
(72) Inventor: Yoichi, Komoto, c/o Kurashiki Kako Co., Ltd., Kurashiki-shi, Okayama 712 (JP); Sumio, Uchida, c/o Kurashiki Kako Co., Ltd., Kurashiki-shi, Okayama 712 (JP); Shinichi, Kusaka, c/o Kurashiki Kako Co., Ltd., Kurashiki-shi, Okayama 712 (JP)
(74) Representative: Laufhütte, Dieter, Dr.-Ing.

(57) **Abstract**

The present invention is directed toward obtaining a rebound restriction function at least equivalent to the conventional mount in which a separate rebound stopper is fitted in a later stage, while eliminating the separate rebound stopper. Inner (1) and outer (2) cylinders are coupled to each other through a rubber elastic body (3). A pressure receiving room (5) in which a liquid is encapsulated is formed in a lower part. A balancing room (6) in which a liquid and an air are encapsulated is formed in an upper part. Both the rooms are communicated with each other through orifice passages (7). The balancing room is defined, in a manner of being unchangeable in capacity, by the inner periphery of the outer cylinder and a rebound receiving part formed by bending an upper portion of an intermediate cylinder (4) toward the inner cylinder. A rebound stopper portion (33) and the rubber elastic body are formed into one piece. The rubber elastic body is formed through curing under a structure integral with the inner and intermediate cylinders so that the top end surface of the rebound stopper portion can be made contact with but cannot be adhered to the inner periphery of the rebound receiving part. The mount is mounted between an engine and a car body so that the inner cylinder is changed in position downward through load of the weight of the engine. Thereby, the rebound stopper portion is changed in position downward by a set amount of rebound-side change of position of the inner cylinder.

## Description

### Background of the Invention

This invention relates to a liquid-encapsulating cylindrical mount for performing a vibration isolating function between a vibration source side and a vibration receiving part side in a manner of a liquid flow between a pressure receiving room and a balancing room through an orifice passage, and particularly relates to a liquid-encapsulating cylindrical mount having a function of restricting an amount of rebound-side change of position of an inner cylinder to a specific amount when receiving vibration.

As an example of such conventional liquid-encapsulating cylindrical mounts, there is known a mount in which a rebound stopper is formed into a piece separate from a rubber elastic body and is fitted on the inner cylinder later, as disclosed in, for example, Japanese Patent Application Laid-Open Gazette No. 3-37444. Here, in order to form the rubber elastic body through curing in a state that it is integral with the inner cylinder and an intermediate cylinder, the inner cylinder and the intermediate cylinder are first inserted into a mold, a core is then set in the mold so as to separate a rebound side part of the inner cylinder from a rebound receiving part of the intermediate cylinder and in this state unvulcanized rubber is poured into the mold, thereby forming the rubber elastic body in which a central portion thereof is adhered to the inner cylinder so as to surround it and an outer peripheral portion thereof is adhered to the intermediate cylinder. Thereafter, the single piece thus formed is press-fitted into an outer cylinder under immersion in a liquid and the rebound stopper separately formed is inserted between the inner cylinder and the rebound receiving part of the intermediate cylinder, thereby producing a liquid-encapsulating cylindrical mount.

Accordingly, the above conventional liquid-encapsulating cylindrical mount additionally requires the work of forming the rebound stopper into a piece separate from the rubber elastic body and the work of fitting the rebound stopper on the rubber elastic body previously formed.

Further, the above liquid-encapsulating cylindrical mount requires to create, in a molding space, a clearance for inserting the core (core for insertion of the rebound stopper) in a state after cured, i.e., in a state before mounted between the vibration source and the vibration receiving part and in no load condition before the weight of the vibration-source-side parts such as an engine is loaded thereon. Therefore, when it is necessary to decrease the clearance between the inner cylinder and the rebound receiving part of the intermediate cylinder, there is a limit to do it in point of the core rigidity to be ensured. In other words, there is a limit to reduce an amount of rebound-side change of position of the inner cylinder. Accordingly, the above liquid-encapsulating cylindrical mount is insufficient for increasing a rebound restriction function.

Meanwhile, it can be considered that in order to increase the rebound restriction function, curing is carried out using the core made thinner than the rebound stopper and the work of inserting the rebound stopper into the clearance is then created in a manner of forcedly displacing the inner cylinder in the direction opposite to the rebound side part thereof. However, this technique involves increased expense in time and effort for the inserting work and increased production cost.

### Summary of the Invention

An object of the present invention is to provide a liquid-encapsulating cylindrical mount capable of obtaining a rebound restriction function at least equivalent to the conventional liquid-encapsulating cylindrical mount in which a separate rebound stopper is fitted in a later stage of production, while eliminating the work of separately forming the rebound stopper and the work of fitting it later thereby reducing a production cost.

An aspect of a liquid-encapsulating cylindrical mount according to the present invention comprises: an inner cylinder connected to one of a vibration source side and a vibration receiving part side; an outer cylinder which surrounds the inner cylinder and is connected to another of the vibration source side and the vibration receiving part side; a rubber elastic body interposed between the outer cylinder and the inner cylinder for connection of both the cylinders with each other; an intermediate cylinder inserted in the rubber elastic body between the outer and inner cylinders; a pressure receiving room and a balancing room which are each formed between the outer and inner cylinders, are respectively located at both sides in a direction of receiving vibration with the inner cylinder placed therebetween and each encapsulate an incompressible liquid; and an orifice passage for communicating the pressure receiving room with the balancing room. Further, a portion of the intermediate cylinder located on the rebound side in the direction of receiving vibration is bent toward the inner cylinder and is formed into a rebound receiving part at a position near to the inner cylinder. In addition, the rubber elastic body and a rebound stopper portion for covering an outer surface on the rebound side of the inner cylinder are formed into one piece. Here, the rebound stopper portion is formed through curing under a structure integral with the intermediate cylinder and the inner cylinder so that the top end surface of the rebound stopper and the inner surface of the rebound receiving part are made contact with but are not adhered to each other in no load condition before the liquid-encapsulating cylindrical mount is mounted on the vibration source side and the vibration receiving part side, while the rebound stopper portion is configured to move away from the rebound receiving part through change of position of the inner cylinder in a direction of application of a weight of the vibration source side in a state that the liquid-encapsulating cylindrical mount is mounted on the vibration source side and the vibration receiving part side so that the weight of the vibration source side is loaded on the inner cylinder.

In the above aspect of the invention, since the rebound stopper portion and the rubber elastic body are formed into one piece through curing, this eliminates time and efforts for separately producing the rebound stopper as in the prior art and therefore, also eliminates the work of fitting the separate rebound stopper in a later stage of production. Further, since the rubber elastic body is formed through curing under a structure integral with the intermediate cylinder and the inner cylinder so that the rebound stopper portion and the rebound receiving part of the intermediate cylinder are made contact with but are not adhered to each other, this eliminates the need for creating a clearance between the inner cylinder and the rebound receiving part of the intermediate cylinder in no load condition, so that the thickness of the rebound stopper portion can be set at a minimum value for prevention of a sound generating when both the metallic members of the inner cylinder and the intermediate cylinder beat against each other. Accordingly, the liquid-encapsulating cylindrical mount of the present invention can obtain a rebound restriction function at least equivalent to the conventional one in which a separate rebound stopper is fitted later while eliminating the work of separately producing the rebound stopper thereby reducing a production cost.

In the present invention, each of the components forming the above liquid-encapsulating cylindrical mount may be specified and another component may be added, as shown in the following cases.

As a first case, the rubber elastic body may be formed through curing under a structure integral with the intermediate cylinder in which the inner surface of the rebound receiving part is not coated with an adhesive.

In the first case, since the rubber elastic body is formed through curing under a structure integral with the intermediate cylinder in which the inner surface of the rebound receiving part is not coated with an adhesive, the inner surface of the rebound receiving part of the intermediate cylinder and the top end surface of the rebound stopper portion of the rubber elastic body are not adhered to each other after curing, i.e., are kept in a non-adhesion state, while the rubber elastic body is adhered, through curing, to the periphery of the inner cylinder and surfaces other than the rebound receiving part of the intermediate cylinder. Therefore, when the liquid-encapsulating cylindrical mount is mounted between the vibration source side and the vibration receiving part side so that the weight of the vibration source side acts on the inner cylinder in a direction of separating the inner cylinder from the rebound receiving part, the rebound stopper portion changes its position in association with the change of position of the inner cylinder so that the rebound stopper portion is located at a distance from the rebound receiving part. The distance is a restricted amount of rebound-side change of position of the inner cylinder. Thus, the rubber elastic body can be formed through curing under a structure integral with the inner cylinder and the intermediate cylinder while the inner surface of the rebound receiving part of the intermediate cylinder and the top end surface of the rebound stopper portion of the rubber elastic body are securely kept in a non-adhesion state.

As a second case, the rebound receiving part may be bent so that the rebound stopper portion touches the rebound receiving part when the weight of the vibration source side is loaded on the inner cylinder thereby restricting an amount of rebound-side change of position of the inner cylinder to a specific amount.

In the second case, the rebound receiving part is positioned so that the amount of rebound-side change of position of the inner cylinder can be restricted to the specific amount when the weight of the vibration source side is loaded on the inner cylinder and vibration is applied from the vibration source side thereto. In other words, the rebound receiving part is formed in a manner of being bent on the inner cylinder side so as to be located at a position near to the inner cylinder whereby the rebound receiving part can restrict the amount of change of position of the inner cylinder to the specific amount in association with the position of the inner cylinder. Accordingly, the amount of rebound-side change of position of the inner cylinder can be securely restricted to the specific amount by the rebound receiving part.

As a third case, the inner cylinder may be placed at an eccentric position deviating from the axis of the outer cylinder on the rebound side in the direction of receiving vibration in no load condition.

In the third case, the inner cylinder is placed at the position decentered on the rebound side with respect to the outer cylinder in no load condition so that at the position, the rebound stopper portion of the inner cylinder is brought into touch with the rebound receiving part of the intermediate cylinder. Thus, at the vibration receiving time when the weight of the vibration source side is loaded on the inner cylinder, the inner cylinder is changed in position by the weight so as to be placed in a proper position relative to the outer cylinder.

Further, as a fourth case, the balancing room may be formed to keep its capacity surrounded by the rebound receiving part of the intermediate cylinder and the outer cylinder constant and a compressible gas may be encapsulated in a part of the balancing room.

In the fourth case, the balancing room is surrounded by the rebound receiving part bent on the inner cylinder side and the outer cylinder, that is, surrounded by members having a relatively high rigidity, so that the balancing room can be formed so as not to change its capacity even when receiving an internal pressure. Further, since a compressible gas is encapsulated in a part of the balancing room, when the internal pressure of the pressure receiving room rises due to the receiving of vibration, the internal pressure is transferred to the gas in the balancing room through the orifice passage so that the gas is compressed thereby changing its volume. As a result of this, the liquid flows from the pressure receiving room to the balancing room through the orifice passage. In other words, the compressibility of the gas in the balancing room allows a liquid flow from the pressure receiving room to the balancing room through the orifice passage, thereby realizing vibration isolation. Accordingly, there can be eliminated a rubber film (diaphragm) which has been conventionally required for the formation of the balancing room. This reduces the number of steps and cost for production.

### Brief Description of the Drawings

Fig. 1 is a transverse cross section showing an embodiment of the present invention.

Fig. 2 is a cross section taken along the A-A line of Fig. 1 and showing a state before an inner cylinder, a rubber elastic body and an intermediate cylinder are press-fitted in an outer cylinder.

Fig. 3 is a cross section taken along the B-B line of Fig. 1.

Fig. 4 is a view showing a state that an engine weight is loaded on the inner cylinder, which corresponds to Fig. 1.

Fig. 5 is a view showing another embodiment of the invention, which corresponds to Fig. 4.

### Detailed Description of the Preferred Embodiments

Description will be made below about embodiments of the present invention with reference to the drawings.

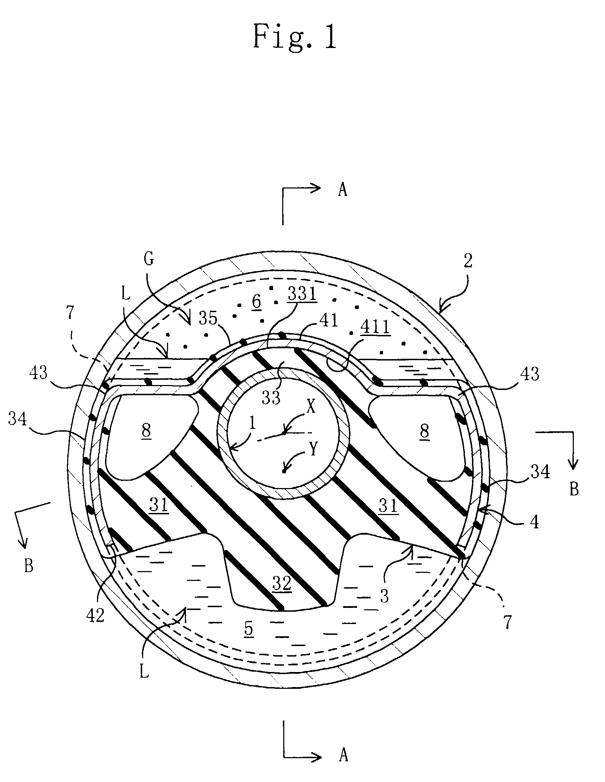

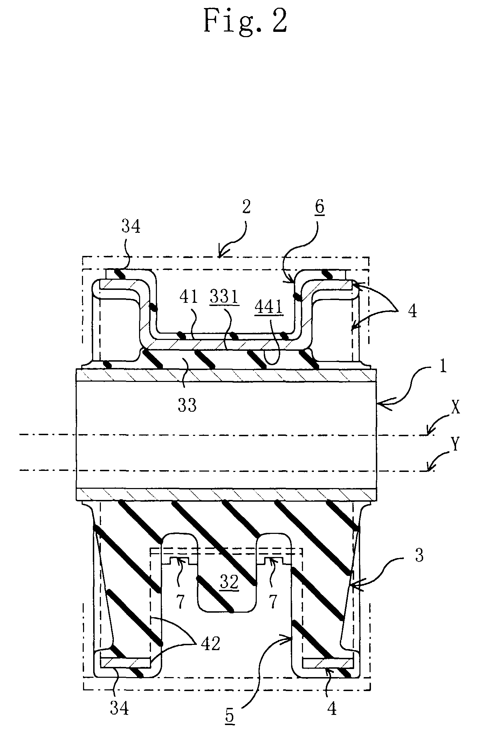

Figs. 1 and 2 show a liquid-encapsulating cylindrical mount according to an embodiment of the invention. In the figures, referential numeral 1 indicates an inner cylinder, 2 indicates an outer cylinder surrounding the inner cylinder 1, 3 indicates a rubber elastic body for connecting the inner cylinder 1 and the outer cylinder 2 to each other, 4 indicates an intermediate cylinder embedded in an outer peripheral position of the rubber elastic body 3 located near to the outer cylinder 2, 5 indicates a pressure receiving room which is defined between the inner and outer cylinders 1, 2 so as to be located below the inner cylinder 1 and encapsulates an incompressible liquid L, 6 indicates a balancing room which is defined between the outer and intermediate cylinders 2, 4 so as to be located above the inner cylinder 1 and encapsulates an incompressible liquid L and a compressible gas G, and 7 indicates an orifice passage for communicating the pressure receiving room 5 with the balancing room 6.

The inner cylinder 1 is supported to the outer cylinder 2 through the rubber elastic body 3 so that the cylinder axis X thereof is located at a set distance above the cylinder axis Y of the outer cylinder 2 and extends in parallel with the cylinder axis Y. In the intermediate cylinder 4, a given region of an upper part thereof is bent in the form of a concave along the contour of the inner cylinder 1 thereby forming a rebound receiving part 41, and a given region of a lower part thereof is cut out thereby forming a cutout window 42.

The rubber elastic body 3 has the following portions formed in one piece: main spring portions 31, 31 as main components which radially extends from the inner cylinder 1 and elastically supports the inner cylinder 1 to the outer cylinder 2 to perform a vibration isolating function; a pressure-receiving side stopper portion 32 projecting downward from the inner cylinder 1 to the pressure receiving room 5; a rebound side stopper portion 33 covering an upper portion of the periphery of the inner cylinder 1 at a specific thickness; a thin portion 34 fitted between the outer periphery of the intermediate cylinder 4 and the inner periphery of the outer cylinder 2 to cover the outer periphery of the intermediate cylinder 4; and a cover portion 35 for covering the outer periphery of the rebound receiving part 41.

Between the main spring portions 31, 31 and the both corner parts 43, 43 of the rebound receiving part 41 of the intermediate cylinder 4, respective through cavities 8, 8 are formed so as to pass through in a direction parallel with the cylinder axes X, Y. When a vibration having a downward large amplitude or a downward large impactive force is applied to the inner cylinder 1, the projective end of the pressure-receiving side stopper portion 32 touches the inner periphery of the outer cylinder 2. In this manner, the pressure-receiving side stopper portion 32 prevents a further, downward, change of position of the inner cylinder 1. When the inner cylinder 1 is rebounded upward at the application of the vibration having a large amplitude, the rebound side stopper portion 33 touches the inner periphery 411 of the rebound receiving part 41 of the intermediate cylinder 4 thereby preventing a further, upward, change of position of the inner cylinder 1. Further, the rebound stopper portion 33 is configured so that the top end surface 331 across both the through cavities 8, 8 is made contact with but is not adhered to the inner surface 411 of the rebound receiving part 41 of the intermediate cylinder 4 when the main spring portions 31 are put under no load conditions.

The pressure receiving room 5 is located at a position corresponding to the cutout window 42 of the intermediate cylinder 4 and is defined in such a manner as to be surrounded by the main spring portions 31, 31 and the inner periphery of the outer cylinder 2. Accordingly, when a vertical vibration is applied to the inner cylinder 1, the inner cylinder 1 relatively changes its position in a vertical direction so that the main spring portions 31, 31 elastically change their forms, which invites variation in pressure of the liquid L in the pressure receiving room 5. The balancing room 6 is defined by the outer surface of the rebound receiving part 41 of the intermediate cylinder 4 and the periphery of the outer cylinder 2 which each have a relatively high rigidity, so as not to change its capacity. In the balancing room 6, a liquid L of an amount no more than covering apertures on the balancing room 6 side of the orifice passages 7, 7, ... and a gas G as s compressible gas occupying an upper space in the balancing room 6 are encapsulated.

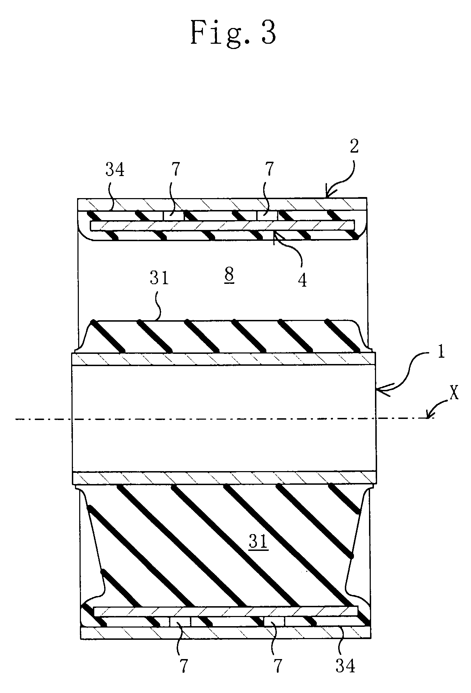

As shown in Fig. 3, the orifice passages 7, 7, ... are each defined by a groove formed in the thin portion 34 on the outer-peripheral side of the intermediate cylinder 4 and the inner periphery of the outer cylinder 2 and are each tuned so that the columnar liquid therein causes resonance through vibration having a specific frequency.

A method of producing the liquid-encapsulating cylindrical mount having the above structure will be described below.

First, the inner cylinder 1, the intermediate cylinder 4 in which the rebound receiving part 41 and the cutout window 42 are previously formed, and cores for forming the through cavities 8, 8 are inserted in a mold for forming the rubber elastic body 3. At this time, an adhesive is applied to the outer periphery of the inner cylinder 1 and the inner and outer peripheries of the intermediate cylinder 4 other than the inner periphery 411 of the rebound receiving part 41, while the inner periphery 411 of the rebound receiving part 41 is not subjected to application of the adhesive, i.e., is kept uncoated with the adhesive. Then, unvulcanized rubber is poured into the mold and curing is carried out. As a result, there is formed a rubber elastic body 3, in which the top end surface 331 of the rebound stopper portion 33 is made contact with but is not adhered to the inner periphery 411 of the rebound receiving part 41 while other parts of the intermediate cylinder 4 and the inner cylinder 1 are adhered through curing.

Next, the molded substance as above is fitted in the outer cylinder 2 in such a manner as to be press-fitted in the inner periphery of the outer cylinder 2 through the thin part 34. At this time, the fitting work is executed, for example, in an unshown bath filled with the liquid L, so that the liquid L is encapsulated in the pressure receiving room 5 and the balancing room 6. Air is injected into the balancing room 6 during or after the liquid encapsulating work, so that a specific amount of air is encapsulated in the balancing room 6.

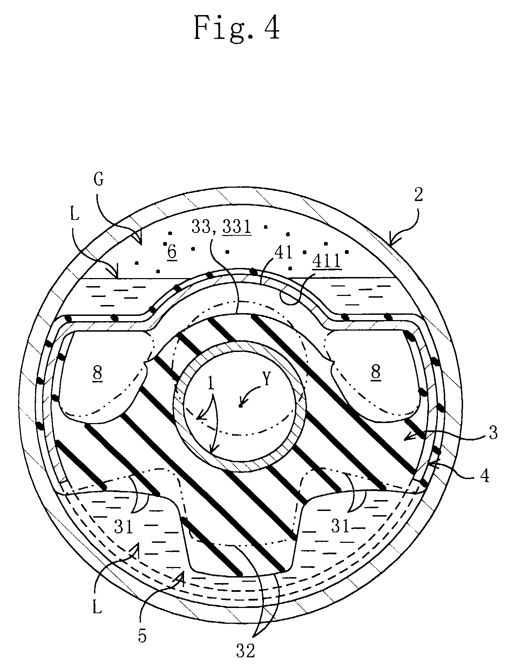

When the liquid-encapsulating cylindrical mount thus produced is used, for example, as an engine mount, it is placed so as to match the vertical direction thereof with a direction that the weight of the engine is applied, and the inner cylinder 1 is connected to the engine side as a vibration source side through bolts inserted in the inner cylinder 1 while the outer cylinder 2 is connected to the car body side as a vibration receiving part side through a bracket or the like. By the connection, the inner cylinder 1 is in a commonly-called 1G state that the weight of the engine is loaded on the inner cylinder 1. The load of weight elastically changes the forms of the main spring portions 31 so that the inner cylinder 1 changes its position relatively downward. Thereby, as shown in Fig. 4, the top end surface 331 of the rebound stopper portion 33 is moved downward away from the inner periphery 411 of the rebound receiving part 41 so that the cylinder axis X of the inner cylinder 1 comes at a position coaxial or near to the cylinder axis Y of the outer cylinder 2.

When a shock downward from the engine side is applied to the inner cylinder 1, the main spring portions 31, 31 warp downward to press the liquid L in the pressure receiving room 5 so that the liquid L flows into the balancing room 6 through the orifice passages 7. The air G in the balancing room 6 is compressed by the liquid L flowing into the balancing room 6 so that a resilient force against the compression occurs. The resilient force causes the liquid L to flow back to the pressure receiving room 5 through the orifice passages 7. At the time, resonance occurs in the columnar liquid flowing through the orifice passages 7 between the pressure receiving room 5 and the balancing room 6 thereby damping the downward shock.

In this case, the liquid L flows between the pressure receiving room 5 and the balancing room 6 according to the compressibility of the air G in the balancing room 6. Therefore, as compared with the conventional liquid-encapsulating cylindrical mount in which the balancing room is configured to have a flexible diaphragm, the present embodiment can eliminate the diaphragm thereby simplifying the structure and reducing the production cost.

Further, even if a vibration having a downward large amplitude is applied to the inner cylinder 1, the pressure-receiving side stopper 32 touches the inner periphery of the outer cylinder 2 thereby restricting the relative amount of change of position of the inner cylinder 1 within a specific range. Also for the rebound side (upward) change of position of the inner cylinder 1, the relative amount of change of position can be securely restricted within a specific range because the rebound stopper portion 33 touches the inner periphery 411 of the rebound receiving part 41.

Furthermore, in contrast to the conventional case that a separate rebound stopper is fitted in a later stage of production, the rebound stopper portion 33 and the rubber elastic body 3 are formed into one piece through curing. This makes it possible to extensively eliminate the production steps thereby considerably reducing the production cost. In addition, since there is no need for creating a clearance for inserting the conventional separate rebound stopper when the amount of rebound-side change of position of the inner cylinder 1 is set, this allows the top end surface 331 of the rebound stopper portion 33 to contact the inner periphery 411 of the rebound receiving part 41 in no load condition (in a state after curing) thereby setting the amount of rebound-side change of position at an amount as small (thin) as possible. This realizes a suitable setting of the relative amount of change of position in accordance with a portion where the mount is to be used.

### 〈Other Embodiments〉

The present invention is not limited to the above embodiment, namely, includes various kinds of other embodiments. In the above embodiment, in order that the top end surface 331 of the rebound stopper portion 33 is not adhered to the inner periphery 411 of the rebound receiving part 41, the inner periphery 411 is not coated with an adhesive. However, for example, the inner periphery 411 may be subjected to a masking process before curing thereby forming a non-adhesion state.

In the above embodiment, the load of the weight of an engine separates the rebound stopper portion 33 from the rebound receiving part 41. However, the inner cylinder may be forcedly loaded before the shipping of the product so that both the members 33, 41 can be separated from each other. Thereby, even if the rebound stopper portion 33 and the rebound receiving part 41 are partly adhered to each other due to a fin deposited or generated through curing, both the members 33, 41 can be securely separated from each other later.

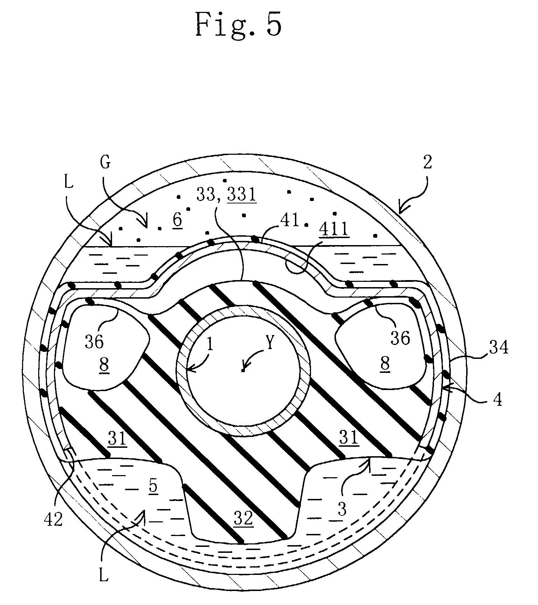

As shown in Fig. 5, through curing, a single piece may be formed by the rubber elastic body 3 and thin rubber portion 36, 36 which connect the main spring portions 31, 31 to the rebound stopper portion 33 so as to surround the through cavities 8, 8. In this case, the thin rubber portions 36, 36 and the inner periphery 411 of the rebound receiving part 41 are not necessarily made in a non-adhesion state as long as the thin rubber portions 36, 36 have no effect on the static resilience of the main spring portions 31, that is, may be in an adhesion state.

## Claims

1. A liquid-encapsulating cylindrical mount comprising:
an inner cylinder connected to one of a vibration source side and a vibration receiving part side;
an outer cylinder which surrounds the inner cylinder and is connected to another of the vibration source side and the vibration receiving part side;
a rubber elastic body interposed between the outer cylinder and the inner cylinder for connection of both the cylinders with each other;
an intermediate cylinder inserted in the rubber elastic body between the outer and inner cylinders;
a pressure receiving room and a balancing room which are each formed between the outer and inner cylinders, are respectively located at both positions in a direction of receiving vibration with the inner cylinder placed therebetween and each encapsulate an incompressible liquid; and
an orifice passage for communicating the pressure receiving room with the balancing room,
wherein a portion of the intermediate cylinder located on the rebound side in the direction of receiving vibration is bent toward the inner cylinder and is formed into a rebound receiving part at a position near to the inner cylinder,
the rubber elastic body and a rebound stopper portion for covering an outer surface on the rebound side of the inner cylinder are formed into one piece,
the rebound stopper portion is formed through curing under a structure integral with the intermediate cylinder and the inner cylinder so that the top end surface of the rebound stopper and the inner surface of the rebound receiving part are made contact with but are not adhered to each other in no load condition before the liquid-encapsulating cylindrical mount is mounted on the vibration source side and the vibration receiving part side, while the rebound stopper portion is configured to move away from the rebound receiving part through change of position of the inner cylinder in a direction of application of a weight of the vibration source side in a state that the liquid-encapsulating cylindrical mount is mounted on the vibration source side and the vibration receiving part side so that the weight of the vibration source side is loaded on the inner cylinder.

2. A liquid-encapsulating cylindrical mount according to claim 1, wherein
the rubber elastic body is formed through curing under a structure integral with the intermediate cylinder in which the inner surface of the rebound receiving part is not coated with an adhesive.

3. A liquid-encapsulating cylindrical mount according to claim 1, wherein
the rebound receiving part is bent so that the rebound stopper portion touches the rebound receiving part when the weight of the vibration source side is loaded on the inner cylinder thereby restricting an amount of rebound-side change of position of the inner cylinder to a specific amount.

4. A liquid-encapsulating cylindrical mount according to claim 1, wherein
the inner cylinder is placed at an eccentric position deviating from the axis of the outer cylinder on the rebound side in a direction of receiving vibration in no load condition.

5. A liquid-encapsulating cylindrical mount according to claim 1, wherein
the balancing room is formed to keep its capacity surrounded by the rebound receiving part of the intermediate cylinder and the outer cylinder constant, and
a compressible gas is encapsulated in a part of the balancing room.
